Europäisches Patentamt

European Patent Office

Office européen des brevets

(19)

(11) Veröffentlichungsnummer: **0 009 476**
**B1**

(12) # EUROPÄISCHE PATENTSCHRIFT

(45) Veröffentlichungstag der Patentschrift:
14.04.82

(21) Anmeldenummer: 79890036.1

(22) Anmeldetag: 25.09.79

(51) Int. Cl.³: **B 65 G 57/03**, B 65 B 35/50

(54) **Vorrichtung zum Übereinanderstapein plattenförmiger Gegenstände.**

(30) Priorität: 25.09.78 AT 6912/78

(43) Veröffentlichungstag der Anmeldung:
02.04.80 Patentblatt 80/7

(45) Bekanntmachung des Hinweises auf die Patenterteilung:
14.04.82 Patentblatt 82/15

(84) Benannte Vertragsstaaten:
DE FR GB IT

(56) Entgegenhaltungen:
CH-A-463 370
DE-A-2 223 005
DE-A-2 701 464

(73) Patentinhaber: ELBAK Batteriewerke Gesellschaft
m.b.H., Puntigamer Strasse 127, A-8055 Graz-Puntigam
Steiermark (AT)

(72) Erfinder: Novotny, Hans Jürgen, Grazerstrasse 34, Graz,
(Steiermark) (AT)
Erfinder: Frieser, Edwin, Dipl.-Kfm., Papiermühlgasse 28,
Graz, (Steiermark) (AT)

(74) Vertreter: Beer, Otto, Dipl.-Ing. et al, Lindengasse 8,
A-1071 Wien (AT)

Vorrichtung zum Übereinanderstapeln plattenförmiger Gegenstände

Die Erfindung betrifft eine Vorrichtung zum Übereinanderstapeln plattenförmiger Gegenstände, die von einer Fördereinrichtung in gleichbleibenden Abständen herangefördert werden, mit einer dem Ende der Fördereinrichtung zugeordneten, stetig umlaufenden Umsetzeinrichtung mit zwei einander gegenüberliegenden, sich synchron um eine gemeinsame Achse drehenden Trägern und mehreren an diesen, zu der genannten Achse parallelen Achsen drehbar gelagerten und sich paarweise gegenüberliegenden Platten, an denen verschwenkbare, in den Raum zwischen den Trägern ragende Klauen vorgesehen sind, die an den von der Fördereinrichtung herangeförderten, plattenförmigen Gegenständen angreifen und diese zu einem Tisch heben, auf dem sie übereinandergestapelt werden, wobei die von den Oberkanten eines einander gegenüberliegenden Klauenpaares definierte Ebene stets parallel zum Tisch und zur Fördereinrichtung verläuft. Derartige Vorrichtungen sind durch die GB-A-845 211 bekannt.

Bei bekannten Vorrichtungen dieser Gattung sind die Träger Armsterne und die die Klauen tragenden Platten viereckige, gebogene Bleche, die innerhalb des Raumes zwischen den Armsternen drehbar aufgehängt sind. Bei dieser bekannten Vorrichtung ergeben sich insoferne Probleme, als die auf dem Tisch übereinandergestapelten, plattenförmigen Gegenstände immer wieder seitliche Schläge von den die Klauen tragenden Platten oder den Sternarmen bekommen, so dass es insbesondere bei rutschigen Gegenständen dazu kommt, dass der gebildete Stapel in Unordnung gerät und unter Umständen sogar vom Tisch herabgeworfen wird.

Der Erfindung liegt die Aufgabe zugrunde, eine Vorrichtung der eingangs genannten Gattung so weiterzubilden, dass die erwähnten Probleme nicht auftreten können.

Erfindungsgemäss wird dies dadurch erreicht, dass die Träger der Umsetzeinrichtung als kreisrunde Scheiben ausgebildet sind und dass die die Klauen tragenden Platten fluchtend in die Scheiben eingelassen sind, wobei der Abstand der Scheiben nur geringfügig grösser als die quer zur Förderrichtung gemessene Ausdehnung der plattenförmigen Gegenstände ist.

Dadurch, dass die Träger als kreisrunde, nicht durchbrochene Scheiben ausgebildet sind und die die Klauen tragenden Platten in diese fluchtend eingelassen sind, ergibt sich praktisch ein Schacht mit glatten Wänden, so dass die übereinandergestapelten, plattenförmigen Gegenstände nicht seitlich verrutschen können. Auch beim Herausbewegen des Stapels aus dem Bereich der Umsetzeinrichtung dienen die glatten Seitenwände der Träger als Führung, so dass der gebildete Stapel seitlich und hinten gut ausgerichtet auf ein weiteres Förderband gebracht werden kann.

Damit die erfindungsgemässe Vorrichtung zum Übereinanderstapeln verschieden breiter Gegenstände verwendet werden kann, hat es sich bewährt, wenn die Scheiben auf der sie tragenden Welle axial verschiebbar und in verschiedenen Abständen voneinander fixierbar gelagert sind.

Ein Ausführungsbeispiel der Erfindung wird nachstehend anhand der schematischen Zeichnung näher erläutert.

Es zeigt:

Fig. 1 einen Schnitt längs der Linie A-B in Fig. 2 und

Fig. 2 die Vorrichtung von links der Fig. 1 aus gesehen.

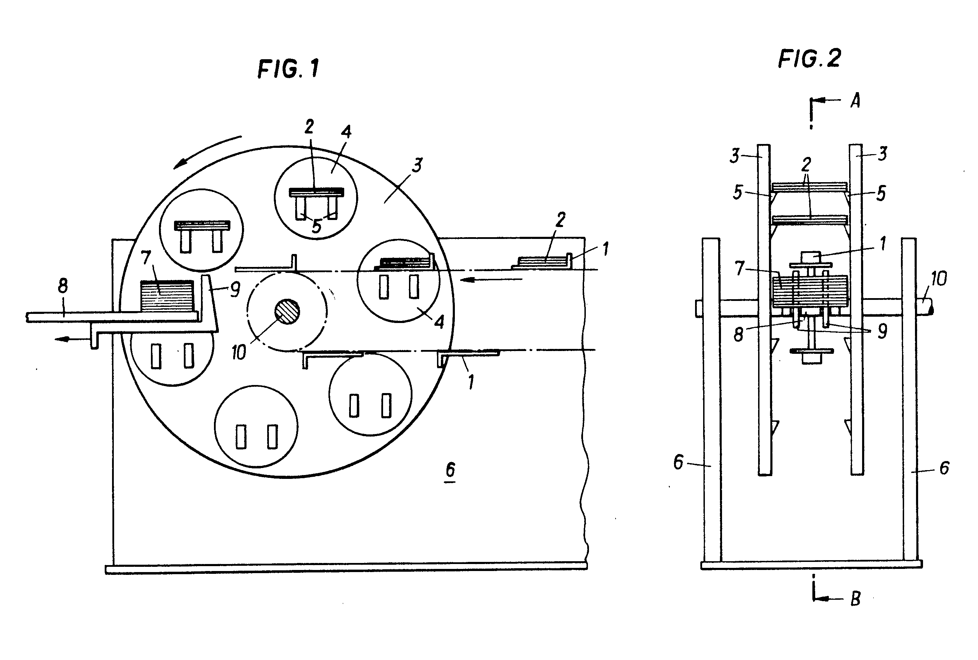

Im Bereich des abgabeseitigen Endes einer Förderkette, welche in regelmässigen Abständen voneinander angeordnete Mitnehmerklauen 1 aufweist, ist in einem Rahmen 6 eine Umsetzeinrichtung vorgesehen, welche die auf den Mitnehmerklauen 1 herangeförderten Plattenblöcke 2 zu einem Tisch 8 hebt und dort zu einem Plattenstapel 7 übereinanderstapelt. Die Umsetzeinrichtung besteht aus zwei Scheiben 3, die in axialer Richtung verstellbar auf einer Welle 10 befestigt sind. Durch die axiale Verstellbarkeit der Scheiben 3 kann deren Abstand an die Breite der herangeförderten, plattenförmigen Gegenstände angepasst werden, wie dies in Fig. 2 ersichtlich ist. In jede Scheibe 3 sind runde Platten 4 eingelassen, wobei die Anordnung so getroffen ist, dass die Innenflächen der Platten 4 mit der Innenfläche der Scheiben 3 fluchten. Die Platten 4 tragen verschwenkbar gelagerte Klauen 5, wobei durch eine mechanische Steuerung dafür gesorgt ist, dass die Oberkanten der Klauen 5 bei Bewegung des Scheibenrades in Richtung des Pfeiles in Fig. 1 stets parallel zur Förderrichtung des Kettenförderers bzw. zur Ebene des Tisches verlaufen. Die Klauen 5 sind in den Platten 4 so gelagert, dass sie unter ihrem Eigengewicht in eine in den Raum zwischen den Scheiben 3 ragende Lage kippen. Die Bewegungsgeschwindigkeit des Kettenförderers und die des Scheibenrades 3 sind so aufeinander abgestimmt, dass immer dann ein Klauenpaar die Bewegungsebene des oberen Trums des Kettenförderers schneidet, wenn sich gerade ein Transportblech im Bereich der Klauen befindet. Die auf dem Transportblech 1 abgelegten Platten werden dann, wie dies aus Fig. 1 ersichtlich ist, von den Klauen 5 abgehoben und zum Tisch 8 bewegt. Dort werden die plattenförmigen Gegenstände unter Zurückschwenken der Klauen 5 auf dem Tisch 8 selbst oder einem dort bereits befindlichen Stapel 7 abgesetzt. Hat sich auf dem Tisch 8 ein genügend hoher Stapel 7 gebildet, dann wird eine Ausziehvorrichtung 9 betätigt und schiebt den Block aus dem Bereich der beiden Scheiben 3 beispielsweise zu einem nicht gezeigten Förderband.

Sowohl beim Übereinanderstapeln der plattenförmigen Gegenstände 2 zu einem Stapel 7 als auch beim Herausschieben dieses Stapels aus dem Bereich der Scheiben 3 dienen die Scheiben 3 bzw. deren glatte Innenflächen als Führung, so dass saubere Stapel gebildet werden und die übereinandergestapelten Gegenstände nicht vom Tisch 8 herabgeworfen werden können.

**Patentansprüche**

1. Vorrichtung zum Übereinanderstapeln plattenförmiger Gegenstände (2), die von einer Fördereinrichtung (1) in gleichbleibenden Abständen herangefördert werden, mit einer dem Ende der Fördereinrichtung (1) zugeordneten, stetig umlaufenden Umsetzeinrichtung mit zwei einander gegenüberliegenden, sich synchron um eine gemeinsame Achse drehenden Trägern (3) und mehreren an diesen, zu der genannten Achse parallelen Achsen drehbar gelagerten und sich paarweise gegenüberliegenden Platten, an denen verschwenkbare, in den Raum zwischen den Trägern ragende Klauen (5) vorgesehen sind, die an den von der Fördereinrichtung (1) herangeförderten, plattenförmigen Gegenständen (2) angreifen und diese zu einem Tisch (8) heben, auf dem sie übereinandergestapelt werden, wobei die von den Oberkanten eines einander gegenüberliegenden Klauenpaares (5) definierte Ebene stets parallel zum Tisch (8) und zur Fördereinrichtung verläuft, dadurch gekennzeichnet, dass die Träger der Umsetzeinrichtung als kreisrunde Scheiben (3) ausgebildet sind und dass die die Klauen (5) tragenden Platten (4) fluchtend in die Scheiben (3) eingelassen sind, wobei der Abstand der Scheiben (3) nur geringfügig grösser als die quer zur Förderrichtung gemessene Ausdehnung der plattenförmigen Gegenstände (2, 7) ist.

2. Vorrichtung nach Anspruch 1, dadurch gekennzeichnet, dass die Scheiben (3) auf der sie tragenden Welle (10) axial verschiebbar und in verschiedenen Abständen voneinander fixierbar gelagert sind.

**Claims**

1. Device for stacking plate-shaped objects (2) which are delivered at constant intervals by a conveying device (1), having a continuously revolving transfer device which is associated with the end of the conveying device (1) and has two mutually opposite carriers (3), which rotate synchronously about a common axis, and several plates which are mounted on these carriers to be rotatable about axes parallel to the said axis and are mutually opposite in pairs and on which pivotable claws (5) are provided which project into the space between the carriers and which grip the plate-shaped objects (2) delivered by the conveying device (1) and lift these to a table (8) on which they are stacked, the plane defined by the upper edges of a pair of mutually opposite claws (5) always being parallel to the table (8) and to the conveying device, characterised in that the carriers of the transfer device are constructed as circular discs (3) and that the plates (4) carrying the claws (5) are sunk flush in the discs (3), the distance between the discs (3) being only slightly greater than the extent of the plate-shaped objects (2, 7), as measured transversely to the conveying direction.

2. Device according to claim 1, characterised in that the discs (3) are mounted on the shaft (10) carrying them, in such a way that they are axially displaceable and can be fixed at various distances.

**Revendications**

1. Dispositif d'empilage d'objets en forme de plaques (2), amenés à intervalles constants par un dispositif transporteur (1), comportant un dispositif de transfert affecté à l'extrémité du dispositif transporteur (1) et tournant continuellement, lequel est formé de deux supports (3) opposés entre eux tournant en synchronisme autour d'un axe commun et de plusieurs plaques (4) se faisant vis-à-vis deux par deux et rotatives autour d'axes parallèles à l'axe précité sur lesquelles sont disposées des griffes pivotables (5) faisant saillie dans l'espace compris entre les supports et attaquant les objets en forme de plaques (2) amenés par le dispositif transporteur et les soulevant jusqu'à une table (8) sur laquelle a lieu leur empilage, le plan défini par les arêtes supérieures d'une paire de griffes (5) opposées entre elles étant constamment parallèle à la table (8) et au dispositif transporteur, dispositif d'empilage caractérisé par le fait que les supports du dispositif de transfert consistent dans des disques circulaires (3) et les plaques (4) portant les griffes (5) sont insérées dans ces disques (3) à fleur avec eux, l'intervalle entre ces mêmes disques (3) n'étant que faiblement supérieur à l'étendue des objets en forme de plaques (2, 7) mesurée transversalement à la direction de transport.

2. Dispositif selon la revendication 1 caractérisé par le fait que les disques (3) sont déplaçables axialement, et fixables à divers écartements mutuels, sur l'arbre (10) qui les porte.

FIG.2

FIG.1